# EUROPÄISCHE PATENTSCHRIFT

(11) **EP 3 771 382 B1**
(45) Veröffentlichungstag und Bekanntmachung des Hinweises auf die Patenterteilung: **17.04.2024**
(21) Anmeldenummer: 20183670.7
(22) Anmeldetag: 02.07.2020
(51) Int. Cl.: A47J 43/07

(54) **HAUSGERÄT MIT SYSTEM ZUM BETRIEB EINER RIEGELVORRICHTUNG**
HOME APPLIANCE WITH SYSTEM FOR OPERATING A LATCH DEVICE
APPAREIL DOMESTIQUE AVEC SYSTÈME DE FONCTIONNEMENT D'UN DISPOSITIF DE VERROUILLAGE

(30) Priorität: 30.07.2019 DE 102019211281
(43) Veröffentlichungstag der Anmeldung: 03.02.2021
(73) Patentinhaber: BSH Hausgeräte GmbH, 81739 München (DE)
(72) Erfinder: Pacnik, Roman, 2383 Smartno pri Slovenj Gradcu (SI); Habe, Mitja, 3320 Velenje (SI); Rudez, Darko, 3230 Sentjur (SI)

(56) Entgegenhaltungen:
- EP-A1- 3 407 308
- WO-A1-2014/026866
- DE-A1- 2 504 774
- DE-A1- 2 717 726
- DE-A1-102010 016 090
- DE-A1-102010 017 719
- DE-A1-102015 201 106
- US-A1- 2015 115 622

## Beschreibung

Die Erfindung betrifft ein Hausgerät, das eine verriegelbare Komponente mit einer Riegelvorrichtung und ein System zum Betrieb der Riegelvorrichtung, die insbesondere in einer Küchenmaschine, dazu verwendet wird, eine Komponente des Hausgeräts, z.B. einen Deckel, zu verriegeln.

Ein Hausgerät kann ein oder mehrere Komponenten aufweisen, die bei Bedarf automatisch verriegelt werden. Beispielsweise kann eine Küchenmaschine mit einem Behälter zur Aufnahme und/oder zur Verarbeitung von Nahrungsmitteln einen Deckel aufweisen, der ggf. automatisch verriegelt werden kann, um den Zugang zu dem Behälter zu unterbinden (z.B., wenn in dem Behälter ein Garprozess durchgeführt wird). Die Verriegelung kann durch eine Riegelvorrichtung mit einem Magnetschalter bewirkt werden.

DE 10 2010 017719 A1 beschreibt einen Behälter für eine Küchenmaschine, wobei der Behälter ein Riegelelement aufweist, das manuell oder elektromechanisch betätigbar ist. US 2015/115622 A1 beschreibt ein Energiemanagementmodul für ein industrielles Verschlusselement. EP 3 407 308 A1 beschreibt eine elektronische Verschlussvorrichtung. DE 10 2015 201 106 A1 beschreibt ein Haushaltskältegerät mit einer elektronischen Schließvorrichtung, die von einem Energiespeicher mit elektrischer Energie versorgt wird.

Das vorliegende Dokument befasst sich mit der technischen Aufgabe, eine Riegelvorrichtung in besonders effizienter und zuverlässiger Weise zu verriegeln oder zu entriegeln, insbesondere um eine Komponente eines Hausgeräts zu verriegeln bzw. zu entriegeln.

Die Aufgabe wird durch den Gegenstand des unabhängigen Patentanspruchs gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Hausgerät nach Anspruch 1 beschrieben. Die Riegelvorrichtung umfasst einen Schalter (insbesondere einen Magnetschalter), der eingerichtet ist, durch einen Schaltvorgang des Schalters einen Bolzen in ein Gegenstück zu bewegen, um die Riegelvorrichtung zu verriegeln, oder den Bolzen aus dem Gegenstück herauszubewegen, um die Regelvorrichtung zu entriegeln. Die Riegelvorrichtung wird in einem Hausgerät, insbesondere in einer Küchenmaschine, dazu genutzt, eine Komponente des Hausgeräts (z.B. den Deckel auf einem Behälter einer Küchenmaschine) bei Bedarf zu verriegeln. Der (lineare) Magnetschalter ist dabei insbesondere als Hubmagnet oder als Verriegelungsmagnet ausgebildet. Insbesondere kann der Magnetschalter ein Hubmagnet oder ein Verriegelungsmagnet sein.

Das System umfasst eine Energieversorgung, die eingerichtet ist, elektrische Energie bereitzustellen. Die Energieversorgung kann eingerichtet sein, eine Gleichspannung bereitzustellen (z.B. eine Gleichspannung im Niedervoltbereich, bei 50V oder weniger, oder bei 25V oder weniger, oder bei 10V oder weniger). Die Energieversorgung kann einen Gleichspannungswandler oder einen Wechselrichter umfassen. Beispielsweise kann die Energieversorgung eingerichtet sein, eine Gleichspannung zum Betrieb des Systems aus einer (AC-) Stromversorgung eines Hausgeräts zu erzeugen.

Des Weiteren umfasst das System zumindest einen elektrischen Energiespeicher, insbesondere einen Kondensator (z.B. einen Keramikkondensator, einen Kunststoff-Folienkondensator, etc.), der eingerichtet ist, mit elektrischer Energie aus der Energieversorgung geladen zu werden. Dabei weist der elektrische Energiespeicher, insbesondere der Kondensator, eine Speicherkapazität zur Speicherung von elektrischer Energie für zumindest einen Schaltvorgang der Riegelvorrichtung auf.

Ferner umfasst das System eine Ansteuerschaltung, die eingerichtet ist, den Schalter (insbesondere den Magnetschalter) der Riegelvorrichtung mit elektrischer Energie aus dem Energiespeicher zu betreiben, um einen Schaltvorgang des Schalters (und damit eine Zustandsänderung der Riegelvorrichtung von entriegelt zu verriegelt, oder umgekehrt) zu bewirken. Die Ansteuerschaltung kann z.B. eine H-Brücke umfassen, die eingerichtet ist, eine erste Spannung mit einer ersten Polarität (z.B. für einen Schaltvorgang zum Öffnen des Schalters) oder eine zweite Spannung mit einer (entgegengesetzten) zweiten Polarität (z.B. für einen Schaltvorgang zum Schließen des Schalters) an den Schalter anzulegen. Die erste und/oder zweite Spannung kann dabei anhand des elektrischen Energiespeichers (insbesondere anhand der an dem Kondensator anliegenden Spannung) erzeugt werden.

Durch die Bereitstellung eines Systems mit einem elektrischen Energiespeicher, insbesondere mit einem Kondensator, der ausreichend elektrische Energie für zumindest einen Schaltvorgang speichern kann, kann in effizienter und zuverlässiger Weise bewirkt werden, dass auch bei einem Ausfall der Energieversorgung des Systems eine Riegelvorrichtung entriegelt werden kann. So kann der Komfort für einen Nutzer eines Hausgeräts, das das in diesem Dokument beschriebene System umfasst, erhöht werden.

Die Ansteuerschaltung ist derart ausgebildet, dass die Ansteuerschaltung für einen Schaltvorgang eine elektrische Mindestleistung zum Betrieb des Schalters benötigt. Dabei kann es sich bei der erforderlichen Mindestleistung für einen Schaltvorgang um den Maximalwert der elektrischen Leistung handeln, der während eines Schaltvorgangs dem Schalter zugeführt wird.

Des Weiteren weist der elektrische Energiespeicher (insbesondere der Kondensator) erfindungsgemäss eine Entladeleistung auf, die gleich wie oder größer als die Mindestleistung für einen Schaltvorgang ist. Es kann somit durch eine entsprechende Auslegung des Energiespeichers sichergestellt werden, dass die Entladeleistung, die der Energiespeicher zur Verfügung stellen kann, zu jedem Zeitpunkt eines Schaltvorgang des Schalters höher ist als die erforderliche Mindestleistung für den Schaltvorgang. So kann in zuverlässiger Weise bewirkt werden, dass ein Schaltvorgang mittels der in dem Energiespeicher gespeicherten elektrischen Energie tatsächlich ausgeführt werden kann.

Andererseits weist die Energieversorgung eine Maximalleistung auf, die kleiner als die Mindestleistung ist, z.B. um einen Faktor von zumindest 2 oder 5 oder 10 (z.B. zwischen 2 und 10 mal) kleiner als die Mindestleistung für einen Schaltvorgang ist. Es kann somit eine kosten-, gewichts- und bauraumeffiziente Energieversorgung für das System verwendet werden. Dies wird durch die Bereitstellung eines zusätzlichen Energiespeichers ermöglicht, da dadurch die Leistungsanforderungen an die Energieversorgung reduziert werden können.

Das System kann eine Steuereinheit (z.B. mit einem Mikrocontroller) umfassen. Die Steuereinheit kann eingerichtet sein, zu bestimmen, dass ein Schaltvorgang des Schalters durchgeführt werden soll. Beispielsweise kann erkannt werden, dass in einem Hausgerät ein Prozess ausgeführt wird, bei dem die Riegelvorrichtung verriegelt sein sollte. Alternativ kann erkannt werden, dass der Prozess in dem Hausgerät beendet ist, und somit die Riegelvorrichtung entriegelt werden kann bzw. sollte.

Die Steuereinheit kann ferner eingerichtet sein, in Reaktion darauf, dass erkannt wird, dass ein Schaltvorgang zum Verriegeln oder zum Entriegeln der Riegelvorrichtung durchgeführt werden soll, die Ansteuerschaltung zu veranlassen, elektrische Energie aus dem Energiespeicher für den Schaltvorgang des Schalters bereitzustellen. Insbesondere kann die Ansteuerschaltung veranlasst werden, eine für den jeweiligen Schaltvorgang erforderliche Spannung (mit der ersten oder der zweiten Polarität) an dem Schalter anzulegen, um den Schaltvorgang des Schalters zu bewirken. Die dafür erforderliche elektrische Energie bzw. Leistung (insbesondere der dafür erforderliche Strom) kann in zuverlässiger Weise und mit ausreichender Höhe aus dem elektrischen Energiespeicher bereitgestellt werden. Somit kann in effizienter Weise ein zuverlässiger Schaltvorgang bewirkt werden.

Die Steuereinheit (insbesondere ein Mikroprozessor) des Systems kann ausgebildet sein, mit elektrischer Energie aus dem Energiespeicher des Systems betrieben zu werden. So kann in zuverlässiger Weise bewirkt werden, dass ein Schaltvorgang des Schalters auch bei Unterbrechung der Energieversorgung durchgeführt werden kann.

Die Steuereinheit kann eingerichtet sein, zu detektieren, dass die Energieversorgung unterbrochen ist. Beispielsweise kann erkannt werden, dass die von der Energieversorgung bereitgestellte Gleichspannung abgesackt ist und/oder unter einen vordefinierten unteren Spannungs-Schwellenwert gesunken ist. Alternativ oder ergänzend kann z.B. erkennt werden, dass eine Eingangsspannung eines Hausgeräts (insbesondere eine Wechselspannung) unterbrochen ist. Beispielsweise kann erkannt werden, dass keine Nulldurchgänge der Eingangsspannung des Hausgeräts mehr erfolgen. Daraus kann geschlossen werden, dass die Energieversorgung des Systems unterbrochen ist.

Die Steuereinheit kann ferner eingerichtet sein, in Reaktion darauf automatisch zu veranlassen, dass die Riegelvorrichtung entriegelt wird. Ggf. kann zunächst überprüft werden, ob die Riegelvorrichtung noch verriegelt oder bereits entriegelt ist. (Ggf. nur) falls erkannt wird, dass die Riegelvorrichtung noch verriegelt ist, kann automatisch ein Schaltvorgang des Schalters bewirkt werden (allein mit der in dem elektrischen Energiespeicher gespeicherten elektrischen Energie), um die Riegelvorrichtung zu entriegeln. Alternativ kann ggf. ohne Überprüfung des Zustands der Riegelvorrichtung automatisch ein Schaltvorgang zum Entriegeln der Riegelvorrichtung veranlasst werden.

Durch das automatische Entriegeln der Riegelvorrichtung bei Erkennung der Unterbrechung der Energieversorgung kann der Komfort eines Nutzers eines Hausgeräts zuverlässig erhöht werden.

Das System kann derart ausgebildet sein, dass der Energiespeicher im Anschluss an einen Schaltvorgang automatisch mit elektrischer Energie aus der Energieversorgung aufgeladen wird. Insbesondere kann das System derart ausgebildet sein, dass ein Kondensator automatisch mit Strom aus der Energieversorgung auf eine bestimmte Spannung aufgeladen wird, um die für einen nachfolgenden Schaltvorgang erforderliche elektrische Energie bereitstellen zu können. So kann ein dauerhaft zuverlässiger Betrieb des Systems bewirkt werden.

Das System umfasst eine Sicherung zwischen der Energieversorgung und dem Energiespeicher, die eingerichtet ist, die elektrisch leitende Verbindung zwischen der Energieversorgung und dem Energiespeicher zu unterbrechen, wenn der Strom über die elektrisch leitende Verbindung einen Strom-Schwellenwert erreicht oder überschreitet. So kann die Sicherheit des Systems weiter erhöht werden.

Alternative oder ergänzend kann das System einen ohmschen Begrenzungswiderstand auf der elektrisch leitenden Verbindung zwischen der Energieversorgung und dem Energiespeicher umfassen, der eingerichtet ist, einen Strom auf der elektrisch leitenden Verbindung zu begrenzen. So können die Sicherheit und die Zuverlässigkeit des Systems weiter erhöht werden.

Der Energiespeicher weist bevorzugt eine Speicherkapazität zur Speicherung von elektrischer Energie für zwei oder mehr Schaltvorgänge der Riegelvorrichtung und/oder des Schalters auf. So kann z.B. bewirkt werden, dass auch bei einem Ausfall der Energieversorgung direkt im Anschluss an einen Schaltvorgang ein weiterer Schaltvorgang zum Entriegeln der Riegelvorrichtung durchgeführt werden kann. Es kann somit die Zuverlässigkeit des Systems weiter erhöht werden.

Beispielhafte Hausgeräte sind eine Waschmaschine, ein Trockner, ein Ofen, eine Spülmaschine, und insbesondere eine Küchenmaschine (etwa eine Küchenmaschine mit Kochfunktion). Das Hausgerät kann eine verriegelbare Komponente mit einer Riegelvorrichtung aufweisen. Dabei kann die verriegelbare Komponente insbesondere einen Deckel zum Abdecken eines Behälters einer Küchenmaschine umfassen. Das Hausgerät umfasst ferner das in diesem Dokument beschriebene System, das eingerichtet ist, die Riegelvorrichtung zu betreiben. So kann ein Hausgerät bereitgestellt werden, das bei Bedarf in zuverlässiger Weise entriegelt werden kann.

Insbesondere kann das System ausgebildet sein, zu detektieren, dass die Stromversorgung des Hausgeräts unterbrochen wurde (z.B. weil der Netzstecker des Hausgeräts ausgesteckt wurde und/oder aufgrund eines Defektes). Es kann in Reaktion darauf automatisch bewirkt werden, dass die Riegelvorrichtung entriegelt wird. So kann der Komfort für einen Nutzer des Hausgeräts in besonderem Maße erhöht werden.

Im Weiteren wird die Erfindung anhand von in der beigefügten Zeichnung dargestellten Ausführungsbeispielen näher beschrieben. Dabei zeigen
- Figur 1: ein Blockdiagramm einer Küchenmaschine als Beispiel für ein Hausgerät;
- Figur 2a: ein beispielhaftes System zur Ansteuerung einer Riegelvorrichtung;
- Figur 2b: einen Magnetschalter (insbesondere einen Hubmagnet oder eine Verriegelungsmagnet) in einem ausgefahrenen Zustand; und
- Figur 2c: einen Magnetschalter (insbesondere einen Hubmagnet oder eine Verriegelungsmagnet) in einem eingefahrenen Zustand.

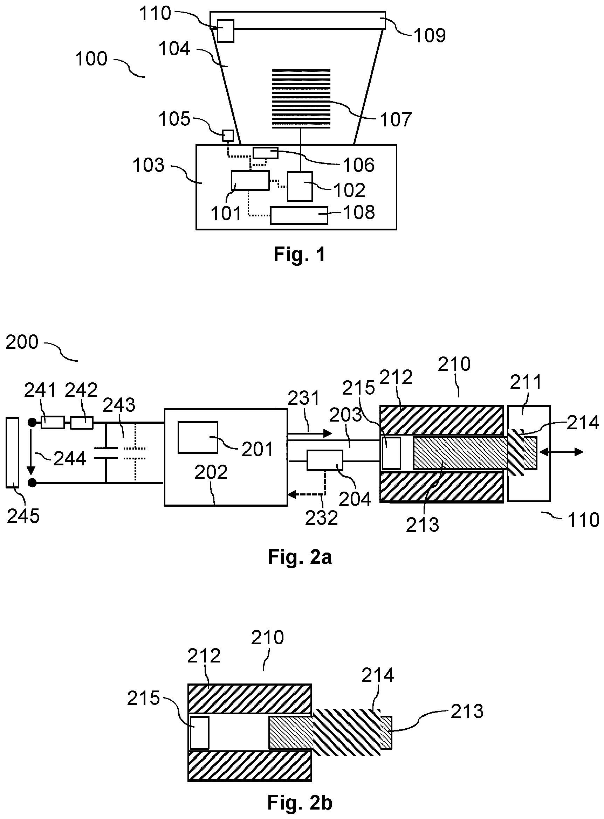

Wie eingangs dargelegt, befasst sich das vorliegende Dokument mit der zuverlässigen und effizienten Ver- bzw. Entriegelung einer Riegelvorrichtung, insbesondere um die Sicherheit und/oder dem Komfort eines Hausgeräts, etwa einer Küchenmaschine, zu erhöhen. In diesem Zusammenhang zeigt Fig. 1 eine beispielhafte Küchenmaschine 100 (als Beispiel für ein Hausgerät). Die in Fig. 1 dargestellte Küchenmaschine 100 umfasst einen Behälter 104, der auf einer Basis 103 der Küchenmaschine 100 angeordnet sein kann und in dem Zutaten für ein herzustellendes Nahrungsmittel verarbeitet werden können, z.B. mittels eines Werkzeugs bzw. Einsatzes 107, das bzw. der ggf. durch einen Motor 102 angetrieben wird. Dabei können ggf. unterschiedliche Werkzeuge 107 (z.B. ein Messer, ein Knethaken oder ein Besen) an dem Motor 102 montiert werden. Die Küchenmaschine 100 kann eingerichtet sein, den Behälter 104 mittels einer Temperierungseinheit 105 zu temperieren, z.B. zu kühlen oder zu erwärmen.

Des Weiteren kann die Küchenmaschine 100 ein oder mehrere Sensoren 106 umfassen, die eingerichtet sind, Sensordaten in Bezug auf die Küchenmaschine 100 (insbesondere in Bezug auf einen Zustand der Küchenmaschine 100) und/oder in Bezug auf das herzustellende Nahrungsmittel zu erfassen. Ein beispielhafter Sensor 106 ist ein Temperatursensor, der eingerichtet ist, Temperaturdaten in Bezug auf die Temperatur des Behälters 104 und/oder des darin enthaltenen Nahrungsmittels zu erfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen. Insbesondere können die Gewichtsdaten das Gewicht des Behälters 104 inklusive des in dem Behälter 104 enthaltenen Nahrungsmittels anzeigen. Da das Eigengewicht des Behälters 104 bekannt ist, kann mittels einer Tara-Funktion auf Basis der Gewichtsdaten das Gewicht des Nahrungsmittels in dem Behälter 104 ermittelt werden.

Außerdem kann die Küchenmaschine 100 eine Benutzerschnittstelle 108 umfassen, die es einem Nutzer ermöglicht, Steuereingaben an die Küchenmaschine 100 zu tätigen (z.B. über ein oder mehrere Knöpfe), und/oder die es der Küchenmaschine 100 ermöglicht, Rückmeldungen an einen Nutzer der Küchenmaschine 100 auszugeben (z.B. über einen Bildschirm). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst die Küchenmaschine 100 eine Steuereinheit 101, die eingerichtet sein kann, Rezeptdaten für ein Rezept zur Herstellung eines bestimmten Nahrungsmittels zu ermitteln (z.B. aus einer Speichereinheit der Küchenmaschine 100 auszulesen oder von einer Datenbank herunterzuladen). Ferner kann die Steuereinheit 101 eingerichtet sein, die Küchenmaschine 100 zumindest teilweise automatisch in Abhängigkeit von den Rezeptdaten zu betreiben, um den Nutzer bei der Herstellung des bestimmten Nahrungsmittels zu unterstützen.

Die Küchenmaschine 100 weist einen Deckel 109 zum Abdecken des Behälters 104 auf. Dabei kann der Deckel 109 mittels einer Riegelvorrichtung 110 verriegelt werden, um den Zugang zu dem Behälter 104 zu unterbinden. Beispielsweise kann die Steuereinheit 101 bestimmen, dass innerhalb des Behälters 104 ein Verarbeitungsschritt durchgeführt wird (z.B. das Scheiden eines Nahrungsmittels), bei dem der Deckel 109 des Behälters 104 verriegelt sein sollte. Die Steuereinheit 101 kann daraufhin die Riegelvorrichtung 110 veranlassen, den Deckel 109 zu verriegeln. Des Weiteren kann die Steuereinheit 101 eingerichtet sein, die Riegelvorrichtung 110 zu veranlassen, nach Beendigung des Verarbeitungsschrittes den Deckel 109 wieder zu entriegeln.

Fig. 2a zeigt ein beispielhaftes System 200 zum Betrieb einer Riegelvorrichtung 110. Die Riegelvorrichtung 110 umfasst in dem dargestellten Beispiel einen Magnetschalter 210, der eingerichtet ist, einen Bolzen bzw. einen Riegel 213 durch eine translatorische Bewegung in ein Gegenstück 211 zu bewegen, um die Riegelvorrichtung 110 zu verriegeln, und/oder den Bolzen 213 durch eine entgegengesetzte translatorische Bewegung aus dem Gegenstück 211 heraus zu bewegen, um die Riegelvorrichtung 110 zu entriegeln.

Der Magnetschalter 210 umfasst eine Spule 212, die einen Hohlraum zur Aufnahme des Bolzens 213 umschließt. Die Spule 212 ist ausgebildet, ein Magnetfeld zu erzeugen, um auf den (ferromagnetischen) Bolzen 213 einzuwirken. Beispielsweise kann durch ein von der Spule 212 erzeugtes Magnetfeld bewirkt werden, dass der Bolzen 213 in den Magnetschalter 210 hineingezogen wird (und somit die Riegelvorrichtung 110 entriegelt wird). Ggf. kann der Magnetschalter 210 einen Permanentmagneten 215 aufweisen, der eingerichtet ist, den Magnetschalter 210 in dem eingefahrenen Zustand (mit eingefahrenem Bolzen 213) zu halten, auch wenn der Strom durch die Spule 212 unterbrochen wird. Der Magnetschalter 210 kann somit bistabil ausgebildet sein,
Des Weiteren kann der Magnetschalter 210 eine Rückstellfeder 214 aufweisen, die eingerichtet ist, den Bolzen 213 aus dem Magnetschalter 210 heraus in einen ausgefahrenen Zustand (mit ausgefahrenem Bolzen 213) zu überführen, wenn durch die Spule 212 kein Magnetfeld bewirkt wird, das den Bolzen 213 in den Magnetschalter 210 hineinzieht. Die Spule 212 des Magnetschalters 210 kann ausgebildet sein, ein Magnetfeld zu erzeugen, dass ausreichend stark ist, um die Rückstellkraft der Rückstellfeder 214 zu überwinden, und um den Bolzen 213 in die eingefahrene Position zu bewegen. Des Weiteren kann die Spule 212 ausgebildet sein, ein ausreichend starkes Magnetfeld (mit einer umgekehrten Polarität) zu erzeugen, um die Rückhaltekraft des Permanentmagneten 215 zu überwinden, und um den bolzen 213 in die ausgefahrene Position zu bewegen.

Es sei darauf hingewiesen, dass die Riegelvorrichtung 100 alternativ in umgekehrter Weise aufgebaut sein kann, so dass die Riegelvorrichtung 100 verriegelt ist, wenn sich der Magnetschalter 210 bzw. der Bolzen 213 im eingefahrenen Zustand befindet, und so dass die Riegelvorrichtung 100 entriegelt ist, wenn sich der Magnetschalter 210 bzw. der Bolzen 213 im ausgefahrenen Zustand befindet.

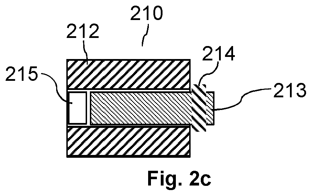

Fig. 2b zeigt den Magnetschalter 210 in dem ausgefahrenen Zustand, und Figur 2c zeigt den Magnetschalter 210 in dem eingefahrenen Zustand.

Das System 200 umfasst eine Ansteuerschaltung 202, die eingerichtet ist, bei Bedarf (über Leitungen 203) einen Strom 231 durch die Spule 212 des Magnetschalters 210 zu bewirken oder zu unterbinden. Die Ansteuerschaltung 202 kann durch eine Steuereinheit 201 (z.B. durch die Steuereinheit 201 des Hausgeräts 100) betrieben werden. Insbesondere kann die Steuereinheit 201 eingerichtet sein, die Ansteuerschaltung 202 zu veranlassen, einen ersten (z.B. einen positiven) Strom 231 zu bewirken, um den Magnetschalter 210 von dem ausgefahrenen Zustand in den eingefahrenen Zustand zu überführen. Der Magnetschalter 210 kann ggf. durch Verwendung eines Permanentmagneten 215 stromlos in dem eingefahrenen Zustand gehalten werden. Alternativ oder ergänzend kann die Steuereinheit 201 eingerichtet sein, die Ansteuerschaltung 202 zu veranlassen, einen zweiten (z.B. einen negativen) Strom 231 zu bewirken, um den Magnetschalter 210 von dem eingefahrenen Zustand in den ausgefahrenen Zustand zu überführen. Der erste und/oder zweite Strom 231 kann z.B. durch Anlegen einer ersten und/oder zweiten Spannung an der Spule 212 bewirkt werden.

Das System 200 kann eine Messeinheit 204 umfasst, die eingerichtet ist, Strominformation in Bezug auf den durch die Spule 212 bewirkten Strom 231 zu erfassen. Die Messeinheit 204 kann z.B. einen Shunt-Widerstand, einen Hall Sensor und/oder einen Strom-Transformator umfassen. Die Strominformation kann (insbesondere von der Steuereinheit 201) dazu genutzt werden, den Zustand des Magnetschalters 210 zu ermitteln.

Das System 200 wird mit elektrischer Energie aus einer Energieversorgung 245 versorgt. Die Energieversorgung 245 kann z.B. einen Gleichspannungswandler und/oder einen Wechselrichter umfassen, der eingerichtet ist, eine bestimmte DC (Direct Current) Versorgungsspannung 244 für das System 200 bereitzustellen. Die Energieversorgung 245 des Systems 200 kann z.B. an einem Netzanschluss eines Hausgeräts 100 angeschlossen sein, um elektrische Energie bereitzustellen.

Des Weiteren kann das System 200 ein oder mehrere Sicherungen 241 umfassen, die eingerichtet sind, das System 200 von der Energieversorgung 245 zu trennen (z.B. bei Vorliegen eines Kurzschlusses in dem System 200). Ferner kann das System ein oder mehrere Begrenzungs-Widerstände 242 umfassen, die eingerichtet sind, einen in das System 200 fließenden Strom (z.B. bei Vorliegen eines Kurzschlusses und/oder bei Inbetriebnahme des Systems 200) zu begrenzen.

Die Energieversorgung 245 weist typischerweise eine bestimmte Maximalleitung. Beispielsweise kann die Versorgungsspannung 244 zwischen 3.3V und 24V liegen, und der Strom kann ggf. auf 100mA (z.B. zwischen 100mA und 200mA) begrenzt sein. Es kann somit eine begrenzte elektrische Leistung zum Betrieb des Magnetschalters 210 vorliegen, wodurch die Durchführung einer Zustandsänderung des Magnetschalters 210 ggf. beeinträchtigt sein kann.

Alternativ oder ergänzend kann es ggf. in einem Hausgerät 100 zu einer Unterbrechung der Energieversorgung 245 kommen. Beispielsweise kann es vorkommen, dass es zu einer Unterbrechung des Versorgungsnetzes kommt. In einem weiteren Beispiel kann eine Sicherung des Hausgeräts 100 ausgelöst worden sein, so dass die Energieversorgung 245 des Systems 200 von dem Netzanschluss des Hausgeräts 100 getrennt wird. Ohne Bereitstellung einer Versorgungsspannung 244 kann typischerweise keine Zustandsänderung des Magnetschalters 210 bewirkt werden. Als Folge daraus kann es infolge einer Unterbrechung der Energieversorgung 245 dazu kommen, dass eine Riegelvorrichtung 110 des Hausgeräts 100 nicht mehr entriegelt werden kann, so dass der Nutzer der in Fig. 1 dargestellten Küchenmaschine z.B. nicht mehr den Deckel 109 von dem Behälter 104 entfernen kann. Dies kann für einen Nutzer des Hausgeräts 100 unbefriedigend sein.

Das System 200 umfasst ein oder mehrere Kondensatoren 243 (d.h. allgemein elektrische Energiespeicher), die eingerichtet sein, ausreichend elektrische Energie für ein oder mehrere Zustandsänderungen des Magnetschalters 210 zu speichern. Die ein oder mehreren Kondensatoren 243 können an dem Eingang der Ansteuerschaltung 202 (d.h. zwischen der Energieversorgung 245 und der Ansteuerschaltung 202) angeordnet sein. Die Ansteuerschaltung 202 kann eingerichtet sein, die erforderliche elektrische Energie, insbesondere den Strom 231, für einen Schaltvorgang des Magnetschalters 210 zumindest teilweise aus den ein oder mehreren Kondensatoren 243 zu entnehmen. So kann eine zuverlässige und schnelle Bereitstellung von elektrischer Energie für einen Schaltvorgang bewirkt werden.

Im Anschluss an die Durchführung eines Schaltvorgangs können die ein oder mehreren Kondensatoren 243 wieder aus der Energieversorgung 245 des Systems 200 aufgeladen werden. Dabei kann die Maximalleistung der Energieversorgung 245 relativ klein sein, da für das Wiederaufladen der ein oder mehreren Kondensatoren 243 typischerweise relativ viel Zeit zur Verfügung steht. Es kann somit ein kosten-, gewichts- und bauraumeffizientes System 200 mit einer relativ kleinen und/oder leistungsschwachen Energieversorgung 245 verwendet werden.

Die vorliegende Erfindung ist nicht auf die gezeigten Ausführungsbeispiele beschränkt. Insbesondere ist zu beachten, dass die Beschreibung und die Figuren nur das Prinzip des vorgeschlagenen Systems und/oder des vorgeschlagenen Hausgeräts veranschaulichen sollen.

## Patentansprüche

1. Hausgerät (100), das eine verriegelbare Komponente (104, 109) mit einer Riegelvorrichtung (110) und ein System (200) zum Betrieb der Riegelvorrichtung (110) umfasst; wobei die Riegelvorrichtung (110) einen Schalter (210) umfasst, der eingerichtet ist, durch einen Schaltvorgang einen Bolzen (213) in ein Gegenstück (211) zu bewegen, um die Riegelvorrichtung (110) zu verriegeln, oder den Bolzen (213) aus dem Gegenstück (211) herauszubewegen, um die Regelvorrichtung (110) zu entriegeln; wobei das System (200) umfasst,
- eine Energieversorgung (245), die eingerichtet ist, elektrische Energie bereitzustellen;
- zumindest einen elektrischen Energiespeicher (243), der eingerichtet ist, mit elektrischer Energie aus der Energieversorgung (245) geladen zu werden; wobei der Energiespeicher (243) eine Speicherkapazität zur Speicherung von elektrischer Energie für zumindest einen Schaltvorgang der Riegelvorrichtung (110) aufweist; und
- eine Ansteuerschaltung (202), die eingerichtet ist, den Schalter (210) der Riegelvorrichtung (110) mit elektrischer Energie aus dem Energiespeicher (243) zu betreiben, um einen Schaltvorgang zu bewirken; wobei die Ansteuerschaltung (202) für einen Schaltvorgang eine elektrische Mindestleistung zum Betrieb des Schalters (210) benötigt; wobei der Energiespeicher (245) eine Entladeleistung aufweist, die gleich wie oder größer als die Mindestleistung ist;
**dadurch gekennzeichnet, dass** die Energieversorgung (245) eine Maximalleistung aufweist, die kleiner als die Mindestleistung ist; und
- eine Sicherung (241) zwischen der Energieversorgung (245) und dem Energiespeicher (243), die eingerichtet ist, eine elektrisch leitende Verbindung zwischen der Energieversorgung (245) und dem Energiespeicher (243) zu unterbrechen, wenn ein Strom über die elektrisch leitende Verbindung einen Strom-Schwellenwert erreicht oder überschreitet; und/oder
- einen ohmschen Begrenzungswiderstand (242) auf der elektrisch leitenden Verbindung zwischen der Energieversorgung (245) und dem Energiespeicher (243), der eingerichtet ist, den Strom auf der elektrisch leitenden Verbindung zu begrenzen.

2. Hausgerät (100) gemäß Anspruch 1; wobei
- die Energieversorgung (245) eingerichtet ist, eine Gleichspannung bereitzustellen; und/oder
- die Energieversorgung (245) einen Gleichspannungswandler oder einen Wechselrichter oder einen AC/DC Wandler umfasst.

3. Hausgerät (100) gemäß einem der vorhergehenden Ansprüche; wobei
- das System (200) eine Steuereinheit (201) umfasst; und
- die Steuereinheit (201) eingerichtet ist,
- zu bestimmen, dass ein Schaltvorgang des Schalters (210) durchgeführt werden soll; und
- in Reaktion darauf, die Ansteuerschaltung (202) zu veranlassen, elektrische Energie aus dem Energiespeicher (243) für den Schaltvorgang des Schalters (210) bereitzustellen.

4. Hausgerät (100) gemäß Anspruch 4; wobei die Steuereinheit (201) ausgebildet ist, mit elektrischer Energie aus dem Energiespeicher (243) betrieben zu werden.

5. Hausgerät (100) gemäß einem der vorhergehenden Ansprüche; wobei
- das System (200) eine Steuereinheit (201) umfasst; und
- die Steuereinheit (201) eingerichtet ist,
- zu detektieren, dass die Energieversorgung (245) unterbrochen ist; und
- in Reaktion darauf automatisch zu veranlassen, dass die Riegelvorrichtung (110) entriegelt wird.

6. Hausgerät (100) gemäß einem der vorhergehenden Ansprüche; wobei das System (200) derart ausgebildet ist, dass der Energiespeicher (232) im Anschluss an einen Schaltvorgang automatisch mit elektrischer Energie aus der Energieversorgung (245) aufgeladen wird.

7. Hausgerät (100) gemäß einem der vorhergehenden Ansprüche, wobei der Schalter (210) einen Magnetschalter, insbesondere einen Hubmagnet oder einen Verriegelungsmagnet, umfasst.

8. Hausgerät (100) gemäß einem der vorhergehenden Ansprüche, wobei der Energiespeicher (243) eine Speicherkapazität zur Speicherung von elektrischer Energie für zwei oder mehr Schaltvorgänge der Riegelvorrichtung (110) aufweist.

9. Hausgerät (100) gemäß einem der vorhergehenden Ansprüche, wobei der elektrische Energiespeicher (243) zumindest einen Kondensator umfasst.

10. Hausgerät (100) gemäß einem der vorhergehenden Ansprüche, wobei
- das Hausgerät (100) eine Küchenmaschine umfasst; und
- die verriegelbare Komponente (104, 109) einen Deckel (109) zum Abdecken eines Behälters (104) der Küchenmaschine umfasst.

11. Hausgerät (100) gemäß einem der vorhergehenden Ansprüche, wobei das System (200) ausgebildet ist,
- zu detektieren, dass eine Stromversorgung des Hausgeräts (100) unterbrochen wurde; und
- in Reaktion darauf zu bewirken, dass die Riegelvorrichtung (110) entriegelt wird.

## Claims

1. Household appliance (100) which comprises a lockable component (104, 109) with a latch device (110) and a system (200) for operating the latch device (110); wherein the latch device (110) comprises a switch (210) which is designed, by means of a switching process, to move a bolt (213) into a counterpart (211) in order to lock the latch device (110) or to move the bolt (213) out of the counterpart (211) in order to unlock the latch device (110); wherein the system (200) comprises
- an energy supply (245) which is designed to provide electrical energy;
- at least one electrical energy storage device (243) which is designed to be charged with electrical energy from the energy supply (245); wherein the energy storage device (243) has a storage capacity for storing electrical energy for at least one switching process of the latch device (110); and
- a control circuit (202) which is designed to operate the switch (210) of the latch device (110) using electrical energy from the energy storage device (243), in order to bring about a switching process; wherein, for a switching process, the control circuit (202) requires a minimum electrical power for operating the switch (210); wherein the energy storage device (245) has a discharge power which is equal to or greater than the minimum power;
**characterized in that** the energy supply (245) has a maximum power which is less than the minimum power; and
- a fuse (241) between the energy supply (245) and the energy storage device (243), said fuse being designed to interrupt an electrically conductive connection between the energy supply (245) and the energy storage device (243) when a current via the electrically conductive connection reaches or exceeds a threshold value of the current; and/or
- an ohmic limiting resistor (242) on the electrically conductive connection between the energy supply (245) and the energy storage device (243), said limiting resistor being designed to limit the current on the electrically conductive connection.

2. Household appliance (100) according to claim 1; wherein
- the energy supply (245) is designed to provide a DC voltage; and/or
- the energy supply (245) comprises a DC voltage converter or an inverter or an AC/DC converter.

3. Household appliance (100) according to one of the preceding claims; wherein
- the system (200) comprises a control unit (201); and
- the control unit (201) is designed
- to determine that a switching process of the switch (210) is to be carried out; and
- in response thereto to cause the control circuit (202) to provide electrical energy from the energy storage device (243) for the switching process of the switch (210).

4. Household appliance (100) according to claim 4; wherein the control unit (201) is configured to be operated using electrical energy from the energy storage device (243).

5. Household appliance (100) according to one of the preceding claims; wherein
- the system (200) comprises a control unit (201); and
- the control unit (201) is designed
- to detect that the energy supply (245) has been interrupted; and
- to cause the latch device (110) to be unlocked automatically in response thereto.

6. Household appliance (100) according to one of the preceding claims; wherein the system (200) is configured such that the energy storage device (232) is automatically charged with electrical energy from the energy supply (245) after a switching process.

7. Household appliance (100) according to one of the preceding claims, wherein the switch (210) comprises a magnetic switch, in particular a lifting magnet or a locking magnet.

8. Household appliance (100) according to one of the preceding claims, wherein the energy storage device (243) has a storage capacity for storing electrical energy for two or more switching processes of the latch device (110).

9. Household appliance (100) according to one of the preceding claims, wherein the electrical energy storage device (243) comprises at least one capacitor.

10. Household appliance (100) according to one of the preceding claims, wherein
- the household appliance (100) comprises a kitchen appliance; and
- the lockable component (104, 109) comprises a lid (109) for covering a container (104) of the kitchen appliance.

11. Household appliance (100) according to one of the preceding claims, wherein the system (200) is configured
- to detect that a power supply of the household appliance (100) has been interrupted; and
- in response thereto, to cause the latch device (110) to be unlocked.

## Revendications

1. Appareil ménager (100), qui comprend un élément verrouillable (104, 109) comprenant un dispositif de verrouillage (110) et un système (200) pour actionner le dispositif de verrouillage (110),
dans lequel le dispositif de verrouillage (110) comprend un commutateur (210), qui est configuré pour déplacer une broche (213) dans une contre-pièce (211) par une opération de commutation afin de verrouiller le dispositif de verrouillage (110), ou déplacer la broche (213) hors de la contre-pièce (211) pour déverrouiller le dispositif de verrouillage (110),
dans lequel le système (200) comprend :
- une alimentation d'énergie (245), qui est configurée pour fournir de l'énergie électrique,
- au moins un accumulateur d'énergie électrique (243), qui est configuré pour être chargé avec de l'énergie électrique à partir de l'alimentation d'énergie (245), dans lequel l'accumulateur d'énergie (243) a une capacité de stockage pour stocker de l'énergie électrique pour au moins une opération de commutation du dispositif de verrouillage (110), et
- un circuit d'excitation (202), qui est configuré pour actionner le commutateur (210) du dispositif de verrouillage (110) avec de l'énergie électrique issue de l'accumulateur d'énergie (243), pour produire une opération de commutation, dans lequel le circuit d'excitation (202) a besoin, pour une opération de commutation, d'une puissance électrique minimale pour actionner le commutateur (210),
dans lequel l'accumulateur d'énergie (245) possède une puissance de décharge, qui est supérieure ou égale à la puissance minimale,
**caractérisé en ce que** l'alimentation d'énergie (245) a une puissance maximale qui est inférieure à la puissance minimale, et
- un coupe-circuit (241) entre l'alimentation d'énergie (245) et l'accumulateur d'énergie (243), qui est configuré pour interrompre une liaison électriquement conductrice entre l'alimentation d'énergie (245) et l'accumulateur d'énergie (243) lorsqu'un courant à travers la liaison électriquement conductrice atteint ou devient supérieur à une valeur seuil de courant, et/ou
- une résistance ohmique de limitation (242) sur la liaison électriquement conductrice entre l'alimentation d'énergie (245) et l'accumulateur d'énergie (243), qui est configurée pour limiter le courant sur la liaison électriquement conductrice.

2. Appareil ménager (100) selon la revendication 1, dans lequel :
- l'alimentation d'énergie (245) est configurée pour fournir une tension continue, et/ou
- l'alimentation d'énergie (245) comprend un transformateur de tension continue ou un onduleur ou un convertisseur CA/CC.

3. Appareil ménager (100) selon l'une des revendications précédentes, dans lequel :
- le système (200) comprend une unité de commande (201), et
- l'unité de commande (201) est configurée pour :
- déterminer qu'une opération de commutation du commutateur (210) doit être exécutée, et
- en réaction à cela, amener le circuit d'excitation (202) à fournir de l'énergie électrique à partir de l'accumulateur d'énergie (243) pour l'opération de commutation du commutateur (210).

4. Appareil ménager (100) selon la revendication 4, dans lequel l'unité de commande (201) est configurée pour fonctionner avec de l'énergie électrique provenant de l'accumulateur d'énergie (243).

5. Appareil ménager (100) selon l'une des revendications précédentes, dans lequel :
- le système (200) comprend une unité de commande (201), et
- l'unité de commande (201) est configurée,
- pour détecter que l'alimentation d'énergie (245) est interrompue, et
- en réaction à cela, pour amener automatiquement à ce que le dispositif de verrouillage (110) soit déverrouillé.

6. Appareil ménager (100) selon l'une des revendications précédentes, dans lequel le système (200) est configuré de sorte que l'accumulateur d'énergie (232) est rechargé automatiquement avec de l'énergie électrique provenant de l'alimentation électrique (245) à la suite d'une opération de commutation.

7. Appareil ménager (100) selon l'une des revendications précédentes, dans lequel le commutateur (210) est un commutateur magnétique, en particulier un aimant de levage ou un aimant de verrouillage.

8. Appareil ménager (100) selon l'une des revendications précédentes, dans lequel l'accumulateur d'énergie (243) possède une capacité d'accumulation pour stocker de l'énergie électrique pour deux ou plus d'opérations de commutation du dispositif de verrouillage (110).

9. Appareil ménager (100) selon l'une des revendications précédentes, dans lequel l'accumulateur d'énergie électrique (243) comprend au moins un condensateur.

10. Appareil ménager (100) selon l'une des revendications précédentes, dans lequel :
- l'appareil ménager (100) comprend un robot de cuisine, et
- l'élément verrouillable (104, 109) comprend un couvercle (109) pour recouvrir un récipient (104) du robot de cuisine.

11. Appareil ménager (100) selon l'une des revendications précédentes, dans lequel le système (200) est configuré pour :
- détecter qu'une alimentation de courant de l'appareil ménager (100) a été interrompue, et
- en réaction à cela, amener le dispositif de verrouillage (110) à être déverrouillé.
